# EUROPEAN PATENT APPLICATION

(11) **EP 1 818 814 A1**
(43) Date of publication of application: **15.08.2007**
(21) Application number: 06101389.2
(22) Date of filing: 07.02.2006
(51) Int. Cl.: G06F 9/44

(54) **Method for indirect representation and access in an object-oriented programming language**

(71) Applicant: Savinov, Alexandr, 53757 Sankt Augustin (DE)
(72) Inventor: Savinov, Alexandr, 53757 Sankt Augustin (DE)

(57) **Abstract**

A method is provided for indirect representation and access (RA) in an object-oriented programming language. The method is based on using a new programming construct, called concept, which is a pair consisting of one object class and one reference class. A concept-oriented program is described as a hierarchy of concepts where each concept has one parent concept. Concepts in such a program are used instead of conventional classes. An object is represented by means of its complex reference which is a sequence of reference segments. Both object class and reference class of a concept provide special methods of continuation which are called one after another and follow a sequence of reference segments in the object complex reference. The programmer uses these objects as usual and all the intermediate functions needed for indirect representation and access are inserted automatically behind the scenes.

## Description

### FIELD OF THE INVENTION

The present invention relates generally to computer systems and object-oriented programming languages, and more specifically to representation and access in object-oriented programming languages.

### BACKGROUND OF THE INVENTION

The conventional approach to object-oriented programming (OOP) consists in declaring classes of objects and then creating instances of the classes which are stored in the program by using some default format of reference. In order to access such an object it is necessary to specify a variable where its reference is stored and a target method to be executed. In such an approach the programmer does not have control over the reference format and operations executed in order to resolve its value. In other words, we do not know what is actually stored in the default reference and we cannot influence what happens after a method is called and before this method starts executing. It is a responsibility of the compiler, interpreter or execution environment to provide an appropriate object representation format and implement all the necessary object access functionality. From the point of view of the programmer all objects are accessed directly because it is not possible to intervene in this process.

For example, Table 1 contains source code of two Java classes: SourceClass (lines 101-108) and TargetClass (lines 109-116). A method of SourceClass creates an instance of TargetClass and stores its reference in a local variable (line 103). Then it calls a method of this new target object (line 105) and returns an integer result (line 106). An important property of this conventional object-oriented approach is that we do not know the internal format of the reference stored in variable tragetObject (lines 103 and 105). We also have no idea what happens after the target method is called (line 105) and before its first line of code starts executing (line 112). The issue is that the conventional object-oriented programming languages do not provide any mechanisms to change the intermediate operations executed behind the scenes when objects are being accessed. Thus we are not able to find out what object representation format and object access procedures are used.

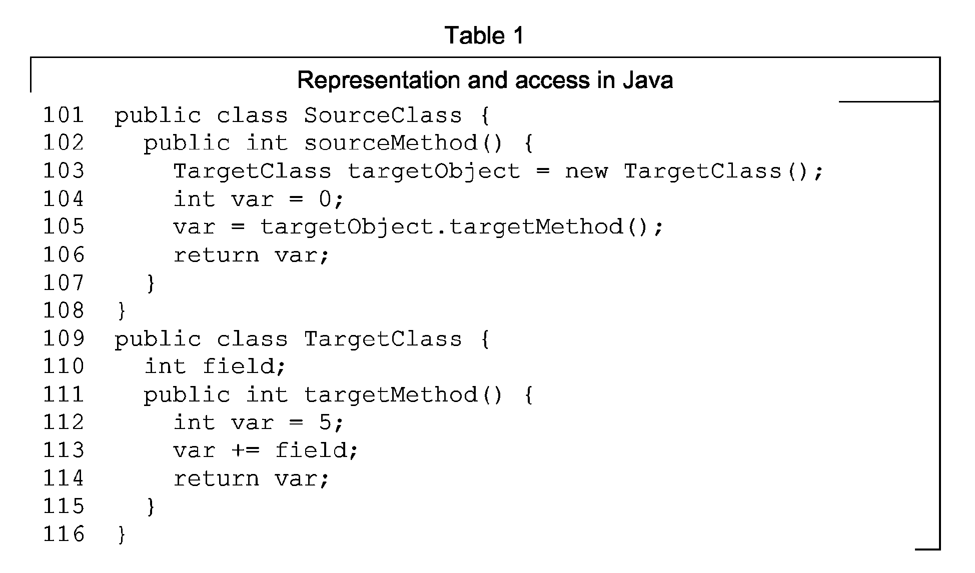

Such an approach where the programmer does not have to care about representation and access (RA) functionality is a significant advantage over previous technologies. The existing object-oriented programming languages such as Java or C++ provide an almost complete illusion of direct (instant) access and hide all the peculiarities of the object representation format creating the impression that nothing happens after a method is called and its execution starts. The programmer has to only create an instance of a class, store its reference in a variable, field or parameter, and then he/she can call its methods even if the underlying mechanism of object representation and access is rather complex. The compiler, interpreter or execution environment is then responsible for the generation of references in some default format as well as for carrying out all intermediate procedures which are necessary to access the object given its reference such as resolution and security checks.

However, such an direct (instant) access and hidden reference format used in prior art object-oriented programming languages is only a convenient illusion or abstraction, and representation and access (RA) functionality does actually exist and is supported implicitly on different levels of the system architecture including hardware and software levels. For example, a memory handle used to represent objects in the C++ programming language is in fact a convention used to represent objects in the global heap. Each such memory handle indirectly represents a real physical position in memory. Each time an object is going to be accessed from the program, the memory manager executes some procedure at the operating system level in order to find the real position of this object in physical memory, check access permissions, load the block into memory from the swap file if necessary and update the current state of the processor to point to this memory block. When access is finished this system procedure should free all resources and update the state of its data structures. It is important to emphasize that most of this RA functionality is not controlled by the programmer at the level of the source code. For example, the programmer cannot specify what concrete permissions should be checked when an object is going to be accessed and how memory blocks are allocated in virtual memory. Moreover, the programmer does not even have to know what happens during memory access and what is the format of the memory handles. This means that in the source code we simply specify a reference along with some target method name and after that all necessary intermediate procedures are executed at the system level behind the scenes so we have an illusion of the method call being executed instantly without any indirection.

Java also does not disclose its structure of references and access procedures to the programmer. We can store/pass references in variables, fields or parameters and then call methods of the referenced object but we never know what happens just before the method starts and have no means to influence the access procedure and reference format. Instead, all the representation and access functionality is maintained by the Java Virtual Machine (JVM) at the level of its execution environment. For example, if we call a method given some reference then JVM has to find the memory handle, which corresponds to this reference value using some internal facilities such as a hash map or look up table. This may involve carrying out some additional tasks like access counting, security checks, swapping, garbage collection, etc. Then this memory handle is passed to the system memory manager which knows how to process it in order to access the physical memory. And again, here the programmer has an illusion of direct Java method call given a reference with unknown format.

The same mechanism is used in distributed programming where references have more complex structures and can be quite large in size because they need to store information about the target object's real position in the network. The access procedure needs to resolve such a complex reference and may involve complex network interactions using different communication protocols. For example, Java remote references and CORBA references allow the programmer to call methods of a remote object as if they were local methods. The programmer is unaware of the reference format provided by the execution environment or a library, and he/she does not know anything about the access procedure executed behind the scenes at the network layer. In the source code the programmer has to only specify a reference and some target method name and then the underlying RA mechanism will do all the rest providing an illusion of direct access. However, just as in the previous examples the problem is that the programmer does not have any means to influence this underlying representation and access layer, for example, by changing the format of references or intervening in the execution of remote methods.

Such a conventional approach is widely used in OOP and is a very convenient mechanism. Indeed, we are given some universal built-in object representation and access methods, which can be used everywhere in our program for all classes of objects. So what is wrong with this prior art approach, what are its disadvantages and why we need something different? Shortly, the main problem is its universality and the absence of convenient customization means. The problem is that typically there is only one RA mechanism provided by the compiler, interpreter or execution environment and there may be a few standard RA mechanisms provided by standard libraries (such as Remote Method Invocation in Java or CORBA).

For a relatively small program that is normally not a big issue and such an approach is very convenient and efficient because almost all the needs are covered by these standard RA mechanisms. However, for larger object-oriented programs such a universal built-in RA mechanism may be too restrictive. The main need here is that different types of objects may require different RA mechanisms which are not provided by default but instead should be designed for each concrete class or a set of classes. For example, the standard memory manager is known to be very inefficient in processing a huge number of small objects which are frequently created and deleted. Hence they should be managed by some special kind of custom container designed precisely for this type of objects taking into account their specific properties. Some program objects may need to store additional information in their references. Large objects could be stored in blocks of memory loaded and discarded separately. Another example is where we would like to have objects stored in a hierarchical memory buffer with the references consisting of multiple segments each specifying a relative position in the hierarchy. For all these cases we need some special RA mechanism that can be chosen for each individual target class. The existing conventional approaches do not allow us to implement RA functionality in an object-oriented language by introducing our own format of references and using our own custom procedures for object access. In particular, we cannot replace the standard representation and access functions by our own procedures provided that the existing code where they are used remains the same. In other words, the existing approach does not allow us to develop an RA mechanism as a part of our program.

How have these problems been traditionally solved in prior art computer programs? In particular, how can the programmer define an arbitrary format of references and intervene in the sequence of access? One common and widespread solution is that RA functions are called manually when we need them to be executed. For example, each time we need to access an object in memory given its handle as a reference, the handle value has to be manually locked and resolved. After executing this auxiliary procedure the target method can be called as usual. When the target method is finished and control is returned to the source method we again manually call another auxiliary procedure unlocking the memory handle and freeing the object. In real world programs this intermediate code is much more complex and may well consist of hundreds and thousands of operators. Each target class may require its own type of intermediate processing for preparing the object and then finishing access. Furthermore all these intermediate actions have to be called manually and explicitly where they are needed depending on the type of object being accessed. One consequence of such a manual mechanism is that the programmer has to write one and the same code in many places of the program. In other words, each time we need to access some target object we need to write some code before and after this method call. With modern computer programs becoming increasingly long and complex this problem is becoming much more acute. If there are 1000 accesses to some object then each time we need to write the corresponding intermediate code (for example, locking and freeing the object). What is even worse, all this auxiliary code in numerous places of the program has to be updated each time we need to change our RA functionality. Thus if something changes in the intermediate access procedure, for example, we set an additional flag before the object is accessed, then we need to update 1000 places in the source code by inserting a line where this flag is set.

For example, the source code in Table 2 is a modified version of the program in Table 1. Here we want to count the number of processes currently accessing objects of class TargetClass using two methods beginAccess (line 214) for incrementing access count and endAccess (line 215) for decrementing access count. However, in Java (and other existing object-oriented programming languages) we have to call these methods manually each time a method of target class is called. In our example auxiliary lines 205 and 207 wrap line 206 which is the target method invocation. If there are more target method calls from other source contexts then we still have to write this pair of intermediate wrapping methods manually. If later we would like to change the way how object accesses are counted we need to manually update all these locations in the source program. One goal of the present invention consists in automating such wrapping and hence simplifying programming because the intermediate code will be called automatically. In particular, using this invention it is enough to write only one line with the target method call (line 206) and all the intermediate code (lines 205 and 207) will be then chosen and called by the compiler implicitly. Using this invention it is possible to automatically insert lines 205 and 207 in all places where we need to access an object of class TargetClass because these objects will be represented and accessed indirectly. Indirection in this case means automatic and implicit wrapping of the target method call into auxiliary methods.

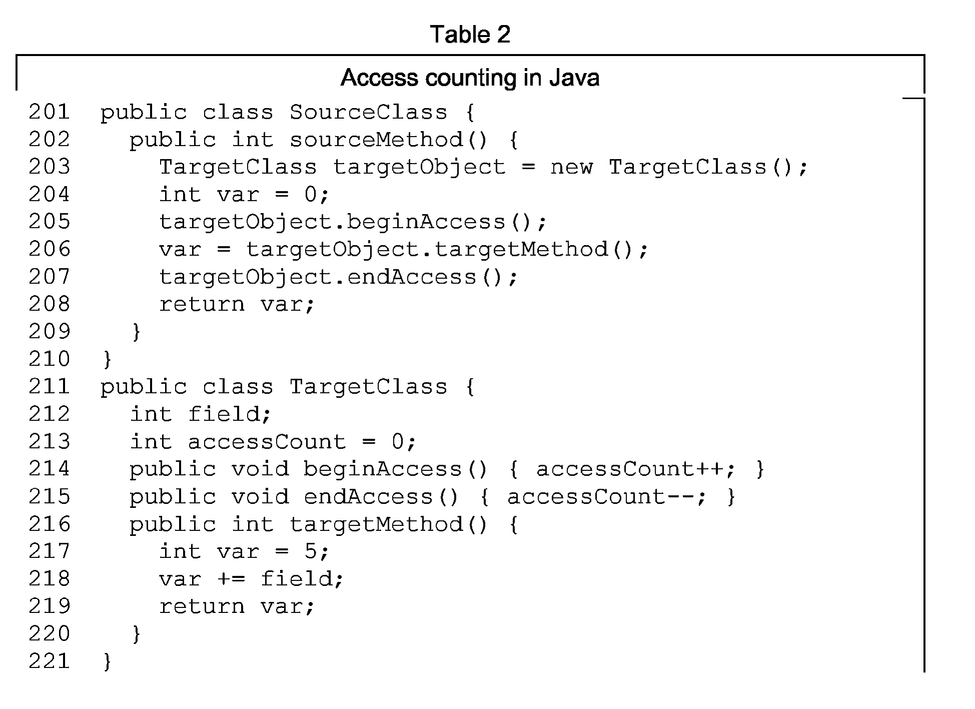

Another existing and widespread method for indirect representation and access consists in using proxies as intermediate classes of objects. A proxy is defined as a normal class and then is used in the program instead of the target class. If we need to create an instance of the target class then instead we create an instance of the proxy. All target variables then reference the proxy (intermediate) class instances and all method calls are intercepted by the proxy which then decides how to process the requests. Normally an incoming method call is dispatched further to the underlying (substituted) target class with some intermediate processing. The proxy class has to know what class it replaces, i.e., it is designed to replace one concrete target class. In particular, all methods of the target class have to be in one or another way available in the proxy, normally by implementing some common interface. For example, if we wanted to indirectly access objects of class TargetClass then we could define a proxy class TargetProxy with the same methods. This proxy should be then used instead of the target class in the program. This approach has the following disadvantages:
- It is impossible to define a custom format of references because proxies are stored as usual by means of default references.
- It requires a great deal of manual support because the target class and its proxy have to be manually kept in a consistent state. For example, if we want to change parameters of some method then it has to be done in both classes.
- It is even more difficult to define a nested sequence of proxies.
- It is difficult to define generic proxies for serving many target classes. For example, we might want to develop some generic memory manager with its own format of references and buffer structure which can be then used for different classes of target objects in the program.

There also exist other possible patterns, which can be followed in order to implement one or another sort of intermediate operations and indirect representation in a programming language. For example, so called smart pointers can be used for automating intermediate functions in C++. Many programming languages provide macro pre-processors allowing code substitution that can be used to automate indirect representation and access. However, all prior art methods are rather specific techniques or patterns, and require significant efforts from the programmer to implement and maintain such a code. In summary, the existing methods for organizing representation and access in an object-oriented computer program impose severe limitations on the programmer because of the necessity to have manual control over the activation of these functions and their maintenance in the source code. It is thus apparent that there is a need in the art for a method for automating the process of defining and maintaining RA functionality in object-oriented programming languages. The present invention provides a method for indirect object representation and access and meets other needs in the art.

### SUMMARY OF THE INVENTION

The present invention provides a method for aiding a programmer in implementing functions of indirect representation and access (RA) as an integral part of the program written in an object-oriented programming language. This method is based on the assumption that these functions account for a great deal and even most of the system complexity. Therefore RA functions have to be described just like any other functions of the program by using class methods in this very program or in a library. This means that for a program we have to be able to describe an arbitrary reference format and access procedure using the same, or a similar compatible, language that is used for the rest of the program (in the source form or as a library). In other words, RA functions should be described in the same way as normal classes and business methods. However, in contrast to normal class methods, such functions have to be activated implicitly and automatically rather than called explicitly and manually. The general goal consists in retaining an illusion of direct (instant) access but having a possibility to develop special representation formats and access procedures. Custom intermediate RA functionality is then triggered automatically and implicitly by the compiler, interpreter or execution environment whenever it is necessary to represent or access an object in the program.

How concretely objects need to be represented and accessed is specified declaratively in the definition of their classes. This information is then used by the compiler which wraps target objects in intermediate objects. In particular, if a target class has one declaration then all its numerous instances in the whole program will be represented and accessed in one way. But if it is declared in some other way then all its instances in the whole program or within some scope will be represented and accessed differently. An advantage is that by only changing the declaration parameters of a class we can automatically change how all its instances are represented and accessed throughout the program. All references will change the format and all method calls will change intermediate procedures into which they are implicitly wrapped. Another advantage is that all RA functions are concentrated in one place from where they (including all changes) are automatically injected into all appropriate locations in the program by the compiler, interpreter or execution environment.

It is supposed that the compiler, interpreter or execution environment using this invention can determine what format of reference and access procedure to use depending on the declaration of the target object class in the source code. Then all method calls of these target objects will always be wrapped in these automatically determined RA procedures. Such automatically determined custom references replace default references and each access is executed by means of some custom resolution procedure. For example, such a method could be used to replace native Java references by unique text strings, which are resolved automatically into the original replaced Java reference each time the target object needs to be accessed. RA functions can be written as a part of the program or as a library. For the method it is important only that it is possible to determine what concrete RA function to use for each object access.

In the present invention each type of object is as usual described by its object class which has a number of fields, methods and other conventional facilities. There may be different ways to describe classes in different languages and standards. For example, a class could be described using some conventional object-oriented programming language, in XML format, using a binary representation or some custom format. It is important only that such a class specification can be used as a template to instantiate its objects. The central idea of this invention consists in using a reference class which is described just like a normal object class but has a special role in the RA mechanism. Reference classes also have fields, methods and other conventional facilities, however they are used to describe a format of references rather than objects. Thus, an object class is intended to describe a format of objects while a reference class is intended to describe a format of references used to represent objects. Notice that objects are represented by means of references.

An object class and a reference class exist as a pair. A pair of one object class and one reference class is referred to as a concept. Thus, a concept can be viewed as a conventional class with an additional associated reference class. If a reference class has not been specified for some concept then such a concept is equivalent to the normal class as used in OOP. Instances of an object class are referred to as objects while instances of a reference class are referred to as references. An important difference between objects and references is that the former are represented and accessed by means of references while the latter are represented and accessed by value. In other words, references do not have their own references and are passed and stored by copying their fields. The main purpose of a reference is to represent some object. Each concept must be able to manage its references (instances of its reference class) which are used to represent other objects. By defining different reference classes it is possible to introduce an arbitrary format of reference for representing objects instead of or in addition to existing references. A concept as a new programming construct allows the programmer to manage both conventional objects and references which are used to represent and access them. An approach to programming where concepts are used instead of classes as a more general programming construct is referred to as concept-oriented programming (COP). In particular, concepts are used to declare types of variables, method parameters, fields and return values. Then these elements of the program can be used to call some methods in a usual manner by specifying variable name followed by method name. The only difference is that each such type is a concept and hence it denotes a pair of one object class and one reference class. As a consequence these objects will be represented and accessed indirectly using some intermediate code.

The next important mechanism used in the present invention is concept inclusion. This means that each concept is included in some parent concept by means of the special inclusion relation. Since concepts are defined as pairs of one object class and one reference class this relation is in the general case defined for two pairs of classes - a child pair and a parent pair. That is, one pair of object and reference classes (child concept) is included in another pair of object and reference classes (parent concept). For each parent concept it is possible to specify its own parent concept. A concept-oriented program is described as an inclusion hierarchy of concepts with one explicit or implicit root concept and some leaf concepts which do not have child concepts. In this inclusion hierarchy each concept is assigned one parent concept and may have several child concepts. Frequently leaf concepts do not have a reference class defined and hence they are normal classes as used in OOP. Each concept in the concept-oriented program is characterized by some position in the inclusion hierarchy. This position is important for the present invention because it determines how its objects will be represented and accessed at run-time. The main idea is that any object is represented and accessed by means of its parent concepts starting from the root and ending with this object concept in a nested manner. In other words, parent concepts are responsible for representation and access to their child concepts. The root concept is responsible for the default RA mechanism. In particular, it generates default references in the system built-in format (like Java references, memory handles or addresses). These root references are used to directly represent objects of child concepts which are included in the root. Each child concept defines its own reference class and generates its own references at run-time. Each such child reference replaces a reference created by the root concept and hence represents some object indirectly. To access such an indirectly represented object we need to resolve its reference into the substituted root reference. The reference resolution procedure is provided by the programmer as a special continuation method of the reference class. This method can be called automatically by the compiler each time this reference needs to be resolved. The obtained root reference can be then used to directly access the represented object.

A complete representation of an object consists of all its parent concept references. Such a sequence of references starting from the root concept and leading to the target concept is referred to as complex reference. Each element in the complex reference is referred to as reference segment. In order to access an object it is necessary to resolve all segments in its complex reference. The very first (high) segment belongs to the root concept. Therefore it does not need to be resolved and can be used to access the represented object. The second segment belongs to the child concept and needs to be resolved using its reference class continuation method. After resolving this reference we get into the next object and execute its object class continuation method. After that we start resolving the third segment of the reference using its own reference continuation method and when it is resolved we call the resolved object continuation method. Thus reference and object continuation methods are called one after another as we move from the root to the target child concept in the inclusion hierarchy. This process continues until the very last (low) segment of the complex reference is resolved. The resolved last segment represents the target object and can be used to directly execute the target method specified in the source code for this reference. Notice that this sequence of continuation method calls is executed automatically while the methods themselves are provided by the programmer. Thus one target method call in the source code results in a sequence of intermediate actions that are executed behind the scenes.

Complex references are analogous to a hierarchical coordinate system such as postal address. The first segment of a postal address is country name. The second segment identifies a city within the context of its country. The third segment represents a street within the context of one city while the fourth segment is a house number within the context of one street. In order to access an object with such an address it is necessary to find (resolve) its country, then in the context of this country resolve the city segment, then in the context of this city resolve the street name and so on until the last segment which will represent the target object. Thus each reference segment is defined in the context of its parent object represented by the previous segment. And vice versa, each reference segment represents an object which is responsible for resolving the next segment.

In order to access an object represented by its complex reference it is necessary to resolve all its segments starting from the very first (high) segment and ending with the last (low) segment representing the target object. The resolved parent objects are frequently accessed from child objects. In order to make such access more efficient and avoid their repeated resolution we propose to use a mechanism of a context stack. Context stack consists of all resolved reference segments of the current target object being accessed. The context stack stores default (direct) references. In the very beginning when the target object is going to be accessed it is empty. The result of resolution of the first segment is stored as the first element of the context stack while the resolved last segment is stored on the top as its last element. The context stack grows when the next segment is resolved and its result is pushed onto its top. The last element on the top of the stack represents the target object while its previous elements represent parent objects.

Table 3 contains a simple example consisting of two concepts which are declared using keyword 'concept'. Concept A (lines 301-313) defines both object class (lines 302-307) and reference class (lines 308-313) declared using keywords 'class' and 'reference', respectively. This concept is included in the system default concept Root which is provided by the compiler. Therefore objects of concept A will be represented using default references. The object class of concept A has one field (line 303) and one method (lines 304-306). This method simply invokes a method (line 305) of the object referenced by the only field and returns the result. Notice that in contrast to OOP the format of reference stored in this object field (line 303) depends on the position of the concept OtherConcept in the inclusion hierarchy (not shown in Table 3). If OtherConcept is included in Root then its objects are represented using the system default format of references. Otherwise its parent concepts determine the format of its references. The reference class of concept A consists of one integer field (line 309) and one method (lines 310-312) with the same name as the method of the object class. Instances of the reference class, references, are passed by value and do not have their own references. This means that references of concept A will be stored in object fields, in local variables, passed in method parameters and returned from methods by value. Their purpose consists in representing some other objects, instances of the object class. The method of the reference class calls the same method of this concept object class by means of keyword 'context' (line 311).

Concept A has one child, concept B (lines 315-323). Object class of concept B has one double field (line 317) and one method returning its value (line 318-320). The reference class of concept B (lines 322-323) has no members (it is empty). Therefore this concept is equivalent to the conventional class as used in OOP. The only difference is that this concept is included in concept A and hence A is responsible for its representation and access (parent concept A indirects child concept B). In particular, objects of concept B are represented by means of integer identifiers as defined in the reference class of its parent concept A (line 309). When an object of concept B is going to be accessed this parent reference with one integer field has to be automatically resolved into the replaced root reference using the methods of continuation (not shown in this example).

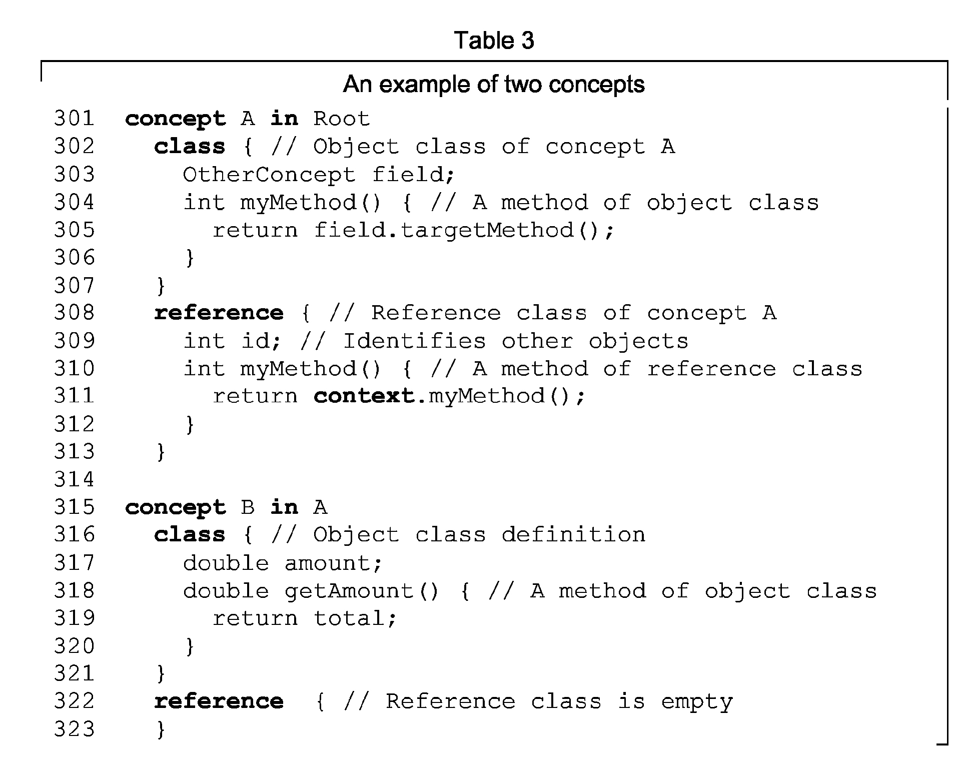

Below we provide a list of main terms which are specific to this invention:
- Concept is a programming construct which is pair of one object class and one reference class. In figures concepts are denoted by means of dashed boxes.
- Object is an instance of an object class which is passed by reference (that is, by copying some other object which is a representative of this object). An object and an object class are denoted by means of a box with solid border.
- Reference is an instance of a reference class which is passed by value (that is, by copying its fields) and intended to represent some object. A reference and a reference class are denoted by means of a black box.
- Inclusion relation is used to specify a parent concept for this concept. Child concept is shown below its parent concept in diagrams.
- Object class continuation method is a special method of the object class called when this object reference has just been resolved. In sequence diagrams this method is shown by means of single arrows.
- Reference class continuation method is a special method of the reference class called when this reference needs to be resolved. In sequence diagrams this method is shown by means of double arrows.
- Complex reference is a sequence of reference segments where each reference segment has a type of one reference class and each next reference segment belongs to a child concept of the previous reference segment. Complex reference is shown as a dotted box surrounding several references ordered vertically.
- Context stack is a data structure which stores resolved reference segments of a complex reference providing direct access to the represented objects. Context stack is shown as a dotted box surrounding several root references ordered horizontally.

### BRIEF DESCRIPTION OF THE DRAWINGS

FIG. 1A is a block diagram of representation and access mechanism in prior art systems.

FIG. 1 B is a block diagram of representation and access mechanism according to the present invention.

FIG. 2 is a diagram showing a concept inclusion hierarchy where each concept has one parent concept and consists of one object class and one reference class.

FIG. 3 is a block diagram showing how objects are represented by complex references.

FIG. 4 is a sequence diagram for reference resolution procedure.

FIG. 5 is a sequence diagram for context resolution procedure.

FIG. 6 is a flowchart depicting a process of compilation of a concept-oriented program.

FIG. 7 is an alternative sequence diagram for object access.

### DETAILED DESCRIPTION OF THE INVENTION

### Representation and access control

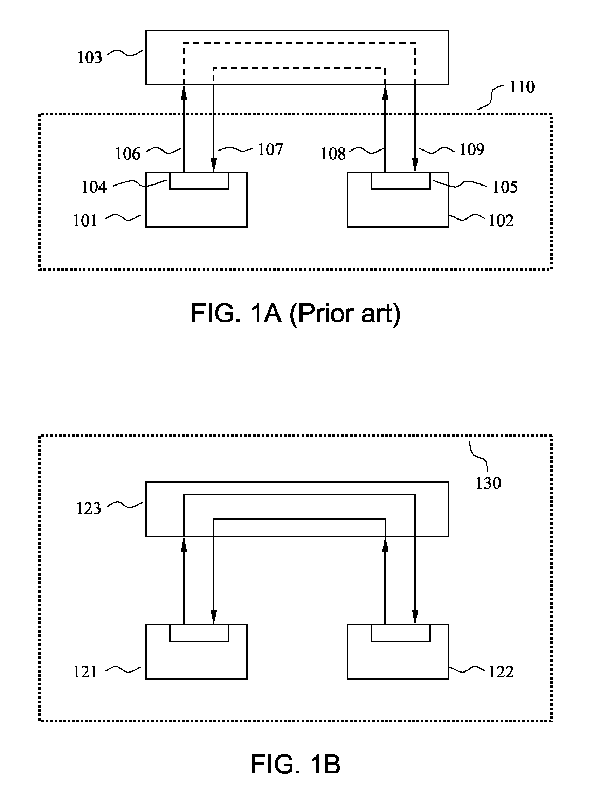

FIG. 1A shows a typical environment for implementing representation and access (RA) functionality in a computer program. It consists of a source object 101, a target object 102 and an intermediate object 103. The source object is executing some method 104 where it stores references to other objects in some format and needs to access them to get some response or to perform a task externally in the target context. In particular, the source object 101 may store a reference to the target object 102 and may need to access it by calling one of its methods 105. The target reference stored in the source object is an indirect representation of the target object and hence there has to be some intermediate object 103. Object 103 knows how to find target objects given their references and how to process access requests by calling target object methods. Intermediate object 103 receives an access request from 101 and then sends it to the target object 102 by calling its method 105. Each access request includes all information which is needed to execute it such as the target object reference, method name and method parameters. In addition to method calls there may be other types of access requests such as messages, event notifications or field read/writes. Each type of access request may require its own parameters to be passed to the intermediate object however all types of requests need the target object reference. Intermediate object 103 encapsulates the logic of representation and access specific to this mechanism while the target object 102 implements some final business methods to be called from outside. A method call in such an approach starts in the source object 101 and then proceeds to the intermediate object (path 106). Then this access request is processed within the intermediate object 103 where the reference is resolved and the target object is found. After that the request is passed to the resolved target object 102 (path 109) and the requested method 105 starts executing. When the target method finishes, control is returned to the intermediate object (path 108) which returns the result to the source object 101 (path 107).

It is important that prior art object-oriented programming languages do not provide any mechanism for explicit control over representation and access in the program and this is why the intermediate object 103 is positioned outside the program 110. Each access request in this case leaves the program and is processed in the external software and/or hardware context. For the programmer there is an illusion that all access requests are processed instantly because after a method has been called its body starts executing immediately. At the same time the programmer has no means to influence or customize the provided default RA mechanism 103 because it is separated from the program 110. In particular, it is not possible to provide a custom reference format or intermediate procedures to be executed during object access. For example, the C++ compiler provides its own format of object references which may depend on the platform and there is no easy way to adapt it to the needs of the program or to develop a new one by using this language. In Java there exists its own reference format which cannot be changed or replaced using this same language. In this case if we call a method of some class given a reference then control is immediately passed to the first statement of the target method. All intermediate actions are executed in JVM and are effectively hidden.

FIG. 1 B shows a typical environment for implementing an RA mechanism according to the present invention. The program 130 includes the intermediate object 123 as well as the source object 121 and the target object 122. In contrast to the prior art approach shown in FIG. 1A, here the intermediate object 123 and its methods are an integral part of the program 130 and hence can be written and controlled by the programmer. Thus this approach allows the programmer to describe his/her own intermediate objects and their special functions as part of the program or library and then use them automatically and implicitly. The purpose of the intermediate objects is to represent other objects and to provide access to them. In particular, it is possible to define a custom reference format and a custom access procedure which then will be automatically used in the program instead of the standard system facilities for all objects of the specified classes. It is important that all objects are still accessed as usual by specifying a reference and method with parameters in the source code. The difference is that now, using this invention, it is possible to specify a reference format and intermediate actions to be used implicitly and automatically. Thus each object is represented indirectly by using some custom reference format defined in the program instead of the default system reference. Object access is indirect because such custom reference must be resolved before an object method can be executed.

### Concepts and concept inclusion

The mechanism of indirect representation and access allows the programmer to describe an arbitrary format of references which are used to represent objects. The format of such custom references is described just like the format of objects by means of fields, methods and other facilities used in the conventional classes. For example, the format of a reference could be defined as an integer or as two fields with different purposes defined by the developer. In the proposed mechanism of RA indirection we distinguish two sorts of format templates - object classes and reference classes. The former are used to describe the structure and functions of conventional objects passed by reference where reference is a representative of the object. The latter are used to describe the structure and functions of references passed by value (that is by copying all the fields) and used to represent objects. Object classes are used in conventional object-oriented programming languages while reference classes are specific to this invention only. Instances of an object class are referred to as objects while instances of a reference class are referred to as references.

The main idea of the present invention is that object classes and reference classes are defined in pairs so that one reference class is associated with one object class. A pair consisting of one object class and one reference class is referred to as a concept. An approach to programming which uses concepts as the main programming construct instead of classes is referred to as concept-oriented programming. Normally concepts have a name although in some situations they could be anonymous. In concept-oriented program variables, method parameters, return values and fields are declared with the type specified as some concept name which is defined as a pair of one object class and one reference class. For example, in Table 3 a field (line 303) is defined as having a type of OtherConcept where OtherConcept is a concept name (not shown in this table).

Just as for a class declaration, there exist very different syntactic means for defining concepts. In the preferred embodiment of this invention a concept definition starts from keyword 'concept' followed by this concept name (line 301 for concept A and line 315 for concept B in Table 3). Then a concept needs to define its object class and reference class. An object class is distinguished by keyword 'class' (line 302 and 316 for concepts A and B, respectively). A reference class starts from keyword 'reference' (line 308 and 322 for concepts A and B, respectively). Both the object class and the reference class have a number of fields and methods. For example, concept A in Table 3 defines its object class as consisting of one field (line 303) and one method (line 304). The reference class of concept A consists of one integer field (line 309) and one method (line 310). A reference class can be empty and in this case its definition is optional. A concept with no reference class is equivalent to a normal class as used in OOP. It is also possible to define a concept with an empty object class.

Concepts are not used alone. Rather, each concept is included in some other concept, called the parent concept, using inclusion relation. Thus, the whole program is not simply a set of concepts but rather a hierarchy of concepts. In this hierarchy any concept has one parent (explicitly defined) and a number of children (not directly known from its declaration). We assume that the parent concept is specified via keyword 'in' followed by the concept name. For example, in Table 3 concept B (line 315) is included in concept A.

There exists a special concept provided by the compiler, interpreter or another kind of system environment by default, which is called Root. Normally functions specific to the root concept are provided as global procedures of the current execution environment or a library. Its reference class defines the format of system default references used in the current environment. For example, in C++ the root concept is provided by the compiler and its format of reference depends on the target platform for which the code is generated. In particular, such root references could be defined as 32 or 64 bit integers allocated by the operating system memory manager in the global heap. In Java, root references are allocated in Java format by the Java Virtual Machine. The root concept provides a kind of ultimate reference used to directly represent and access all objects in the program. This means that even if an object is represented indirectly using some custom reference format we need to get somehow its root reference in order to access it. For example, an object could be represented indirectly via some text string (that is, this string is stored and passed as the object representation). However, if we need to execute any of its methods, read a field or otherwise access it, then it is necessary to resolve this text string into a system default reference in the format of the root concept.

Sometimes an underlying run-time environment provides more than one built-in representation and access mechanism. For example, it is frequently possible to allocate a new memory for an object either in a local heap or in the global heap. This means that there exist two types of standard root references with the corresponding access procedures. Hence there should be two root concepts. If we use some standard library then again it might provide different types of object RA mechanisms. For example, a library might provide managed objects which are automatically garbage collected, persistent objects which are automatically stored in a persistent store and remote objects which exist in the network. These three types of RA mechanisms will be then available as three root concepts. Yet for simplicity below we will assume that there is only one implicit or explicit root concept.

By using the mechanism of concept inclusion the programmer can assign a concrete method of representation and access for every other concept (or normal class which is a concept with empty reference class) in the program. If we want instances of our concept or class to be represented and accessed in one way we include it into one parent concept. If later we want to change how they are represented and accessed then we need to change only the parent concept in the declaration. Or, alternatively, we might modify the parent concept and its logic of representation and access. Then all uses of its child concepts or classes automatically switch to the new representation and access mechanism. In this case there is no necessity to update numerous uses of our child target concepts in the source code because the compiler, interpreter or execution environment will switch automatically and implicitly to the new parent concept and use its functionality.

In order to determine what references represent what objects we use the following principle: an object is represented by its parent concept references. This means that there is one-to-one correspondence between an object of this concept and references of its parent concepts. Since references are passed by value they can be used to represent objects in other points of space. For example, in Table 3 all objects of concept B will be represented by references of concept A because B is included in A. In particular, this means that for each new object of concept B, concept A has to instantiate and initialize a new reference. We might include more concepts in A and then all their objects will be also automatically represented by references of concept A. An advantage of such an approach is that the programmer specifies and can change the parent concept declaratively. For example, if we want to represent objects of some class using remote references then we simply include it into a concept that implements some remote method invocation mechanism.

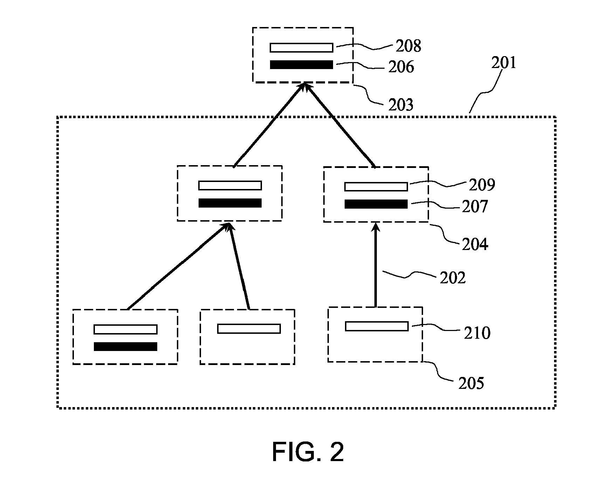

In FIG. 2 the source program 201 consists of a set of 6 concepts. Concepts 203, 204 and 205 correspond to concepts Root, A and B in the source code from Table 3. Each of these concepts is a pair of one object class (shown as a white box with solid border) and one reference class (shown as a black box). Notice that concept 205 has only its object class 210 while its reference class is empty. The root concept 203 is not part of the program because it is provided by the compiler, interpreter or execution environment and is responsible for direct representation and access. The root concept also has the default reference class 206 which is used to directly represent objects (for example, memory handle format or Java reference format). Concept 204 is included in the root concept 203, and concept 205 is included in concept 204 using inclusion relation 202. Concepts 203 and 204 play the special role of an intermediate environment for concept 205. In particular, all instances of concept 205 will be represented by references of its parent concepts 207 and 206.

If there is only one root concept and all classes in the program are included in it with no intermediate concepts then we get the conventional object-oriented representation and access mechanism. In such prior art method the inclusion structure can be viewed as having only one level, references having only one system default type and access being performed using only one type of access procedure. In contrast to this prior art approach, the idea of the present invention is that we can develop our own inclusion hierarchy of concepts by defining our own parent concepts which provide an additional level of indirection for their child classes.

Objects and references are two elements existing at run-time. This means that a concept-oriented program can create instances of reference classes and instances of object classes. In contrast to the existing approaches both elements are defined by the programmer via concepts where they have arbitrary structure appropriate for this program. Each reference is created in the context of some object and only within this object it does have some meaning and can be interpreted as a designation of some other object. An object where a reference has been created is referred to as its context. Many references can be created within one context. The references belonging to one context are interpreted as coordinates or positions within this object. For example, a city object may have many street names and hence different street names (references) exist in the context of one city. And they can be interpreted only within this city context while in the context of other city objects they are meaningless. In particular, an important principle is that any reference can be processed only when its context has been resolved. For example, the root context is an object of the root concept which may allocate many references representing positions or coordinates of internal objects relative to this context. The current context is available in the program via keyword 'context'. For example, line 311 in Table 3 accesses a method defined in the object class of this concept (line 304). Using this keyword we can access an object where this reference has been created. Context plays a role of environment or container for references and frequently provides important data and functions to its internal references and objects. Any object has many references in its context. However, any object has only one reference that represents it. For example, one city object has one name, one street object also has one name, and one house object has one unique number. Notice that for the present invention it is important that we distinguish between objects (such as city) and their references (such as city names).

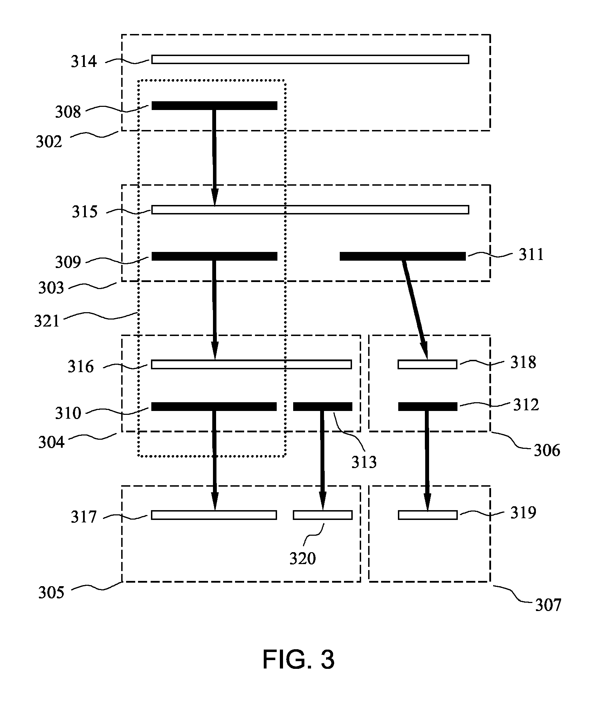

In FIG. 3 objects are shown as white boxes while references are shown as black boxes. Each object (white box) has many references (black boxes) which are positioned below it in the diagram. For example, references 309 and 311 belong to context 315 and references 310 and 313 belong to context 316. On the other hand each object (white box) is represented by one reference (black box) which is shown above it. A reference points to the only represented object using a downward thick arrow. For example, reference 308 represents object 315 (and points to it), reference 309 represents object 316, reference 313 represents object 320 and so on. This representation relation is interpreted precisely as street names represent street objects and house numbers represent house objects. Objects and references are described (at compile time) by their corresponding object class and reference class which belong to some concept. In order to denote the class of references and objects we enclose them into a dashed box which is some concept. For example, object 314 and reference 308 belong to the root concept 302. Object 316 and its references 310 and 313 belong to concept 304 and so on. Objects 317, 320 and 319 have no references in their contexts and they are interpreted as conventional target objects. Keyword 'context' allows us (in the program code) to access object 315 from its references 309 and 311, object 316 from its references 310 and 313 and so on.

Each instance of a reference class is simply a set of fields defined by the programmer and it cannot be used directly to access the represented object. For example, if an object is represented by a text string (according to our own reference class) then this text string cannot be directly used to access the represented object. The idea is that this text string somehow replaces some root reference and hence it needs to be resolved. Thus in order to access the represented object it is necessary to restore its root reference (which is the system default reference) and then use it to directly access the target object. In the present invention it is supposed that each instance of a reference class replaces in one or another way an instance of the root (system default) reference. Using this principle it is possible to find a system default reference given an instance of any reference class. For example, reference 310 has some custom format described in its concept 304 and it is used to represent object 317. However, this reference replaces some root reference (not shown in this diagram) and at run-time the replaced root reference has to be resolved each time we want to access object 317. However, reference 310 has been created in context 316 which knows how to resolve it because it stores information on all its references (including 310 and 313) and how they are mapped to root references. Here we see that context 316 is represented by reference 309 which is also an indirect representation and needs to be resolved. Reference 309 belongs to context 315 which is represented by reference 308 which is a root reference and hence can be used to directly access the represented object.

An important conclusion from this diagram and a principle of the described invention is that any object is completely represented by all its parent references. In other words, in order to completely represent an object it is necessary to store a sequence of references belonging to all its parent concepts. This sequence is analogous to a hierarchical address where the first segment represents a country, the second segment represents a city within this country and so on until the house number. In order to access an object represented by such a hierarchical address we need to resolve all of its segments because each next segment is specified relative to the previous segment. For example, in order to represent object 319 we need to store references 308, 311 and 312. When this object needs to be accessed these references have to be resolved each in its own context. Although each reference represents only one object (for example, 310 represents 317) we also need to store the parent references (309 and 308) in order to represent parent contexts which are needed for resolution.

A sequence of references leading to an object is referred to as a complex reference. One reference within a complex reference is called a reference segment. Each reference segment belongs to one concept where its reference class is described. A fully qualified complex reference starts from the root concept and proceeds to the target concept. One segment corresponds to one reference class on this path from the root to the target concept. For example, complex reference 321 consists of three segments 308, 309 and 310. This complex reference is a complete representation of object 317. There exist also local references which contain only last segments of a fully qualified reference. For example, in order to represent object 317 we might use only two segments 309 and 310 or even only the last segment 310. Local references are used when the context is known or can be otherwise restored. An advantage of fully qualified references is that they have wider scope and can be used (resolved) from anywhere in the program. A disadvantage is that access on such references requires resolution of all intermediate objects represented by their segments. Local references have narrower scope but are more efficient because fewer segments have to be resolved.

When declaring a variable, class field, method parameter, return value or another kind of program object it is necessary to specify its concept name. Then the compiler, interpreter or an execution environment will find a path from the root of the inclusion hierarchy to this target concept. By default the compiler, interpreter or execution environment will create a fully qualified reference which consists of all parent reference segments starting from the root. For example, if our variable is of concept 305 then its reference will consist of three segments 308, 309 and 310 with the format specified in the concepts 302, 303 and 304.

### Reference resolution

In concept-oriented programming two types of methods are distinguished depending on their role:
- business methods (BMs) are called explicitly by the programmer and therefore they are conventional methods used in OOP, and
- representation and access (RA) methods, which are called implicitly by the compiler, interpreter or an execution environment to support indirect representation and access in the program.

In prior art all class methods are business methods because they are called explicitly by the programmer in order to get some concrete function. Such methods are executed directly in OOP because they are applied to a reference of the default type (direct reference). The present invention is based on using intermediate RA methods which are called automatically and implicitly when an object needs to be accessed. The purpose of RA methods is to perform necessary intermediate actions after some BM has been called and before it can be actually executed. The main idea here is that each BM of a target object concept is wrapped automatically in the special RA methods of its parent concepts. More specifically, since an object in the proposed mechanism is represented indirectly it cannot be accessed instantly and some intermediate procedures are needed in order to resolve its complex reference. Since complex references are defined in parent concepts we use these same parent concept methods to resolve them. The concept inclusion relation allows the compiler to determine a sequence of such intermediate method calls. For example, in Table 3 all objects of concept B are represented indirectly by references in the format of its parent concept A. Then each business method call of concept B will be wrapped in intermediate methods of concept A. The main role of the intermediate methods of concept A consists in resolving its reference (with one integer field) into the root (system default) reference which can be then used to directly access the object it represents.

The mechanism of reference resolution is implemented at the level of each concept which defines its own reference class. Thus each concept is responsible for resolution of its references whenever some target object represented by this reference needs to be accessed. This resolution mechanism is implemented via a special continuation method of the reference class called 'continue'. The role of the continuation method consists in providing a door or portal to the next (upper) level. It is not a normal method in the sense of OOP but rather a mechanism for border intersection and context change. It is declared as a method because its implementation is provided by the programmer who decides what should happen when a process intersects this border (not necessarily only reference resolution). The continuation method takes no parameters and returns no value. It is applied to a reference in order to resolve it into the replaced root (direct) reference which can be used for direct access. Whenever an indirectly represented object is going to be accessed, its reference is automatically and transparently resolved by applying the reference continuation method.

Table 4 contains an example of source code consisting of two concepts A (line 401) and B (line 413). They have similar implementation where the object class contains one field (lines 402 and 414) which is intended to store a mapping between this concept reference and the parent reference. Thus references of concept A will be mapped (and resolved) into root references while references of concept B will be mapped (and resolved) into references of concept A. The resolution procedure is implemented in their continuation methods (lines 405 and 418). These methods are called automatically and implicitly by the compiler whenever it is necessary to resolve the corresponding reference into the root reference. In other words, if it is necessary to resolve a reference of concept A then its continuation method (line 405) is called. And if it is necessary to resolve a reference of concept B then its continuation method (line 418) is called. In both cases the continuation method simply uses its current context in order to resolve the only field of the reference and then applies the parent continuation method to this resolved parent reference. For example, the continuation method of concept A resolves its integer field into the root reference (line 407) and then calls the root concept continuation method (line 408). The continuation method of concept B resolves its text string field into a reference of concept A (line 420) and then calls the parent continuation method of concept A (line 421). Line 408 in Table 4 is where the root reference is resolved and this means that it is now possible to directly access the object. (Here we assume that Object is a root concept.) The compiler recognizes such points and uses them to call a method of the next object in the sequence.

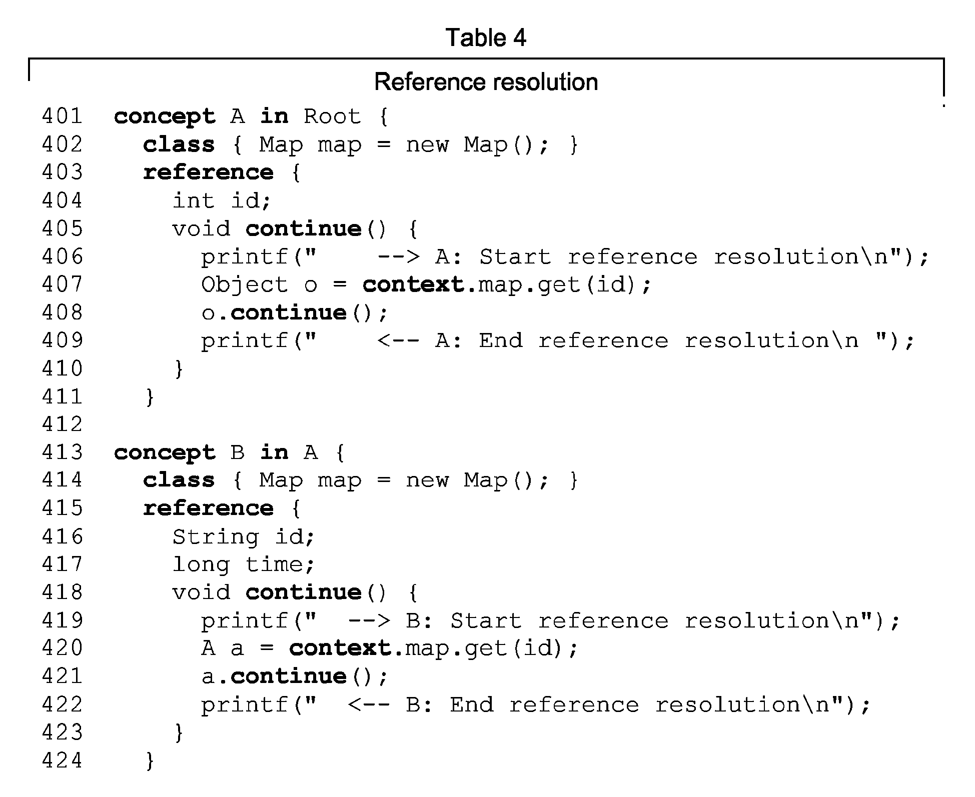

Notice that the continuation methods are provided by the programmer but they are called automatically. In particular, these methods may include any custom code that is appropriate for one or other application (not necessarily the logic of reference resolution). For example, when some reference continuation method starts (lines 406 and 419) we might check permissions, lock some objects, produce a log record or increment access count. When this method is going to return (lines 409 and 422) we might free locks and decrement access count. The code of the continuation method may also use any reference substitution and resolution strategy. In our example, we demonstrated how it can be implemented using a map stored in context. However, in each individual case the programmer should choose an appropriate algorithm for this task. The compiler only expects that the continuation method exists and resolves this concept reference into the root reference that can be used for direct access. It should be noted that references can be resolved directly into root references skipping some parents. For example, a reference of concept B could be resolved into a root reference rather than a reference of its direct parent concept A.

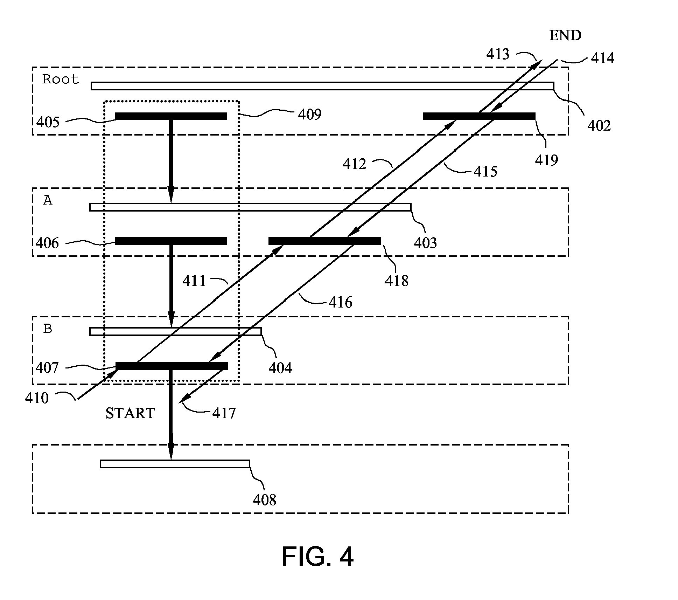

FIG. 4 shows a sequence of reference resolution starting from one segment of reference and ending with a root reference used to directly access the target object. This sequence diagram corresponds to the source code shown in Tables 4 and 5. The program consists of four objects 402, 403, 404 and 408 which are contexts for their references shown as black boxes below their contexts (target object 408 has no references in its context). The root context 402 is a well known object and has no representative (no reference of the parent concept). Its child object 403 (concept A in Table 4) is represented by root reference 405 (denoted by the thick downward arrow from reference to represented object). The context 404 (concept B in Table 4) is represented by parent reference 406. And target object 408 is represented by reference 407. Thus fully qualified complex reference 409 representing target object 408 consists of 3 segments <405, 406, 407> where only the last segment 407 indirectly represents the target object itself while the first two segments 405 and 406 represent its intermediate parent contexts. The target object 408 is indirectly represented by the last segment 407 and hence the resolution process starts from this segment. In order to access the target object 408 (for example, to execute some business method) it is necessary to resolve segment 407 into the substituted root reference 419 which directly represents the target object 408.

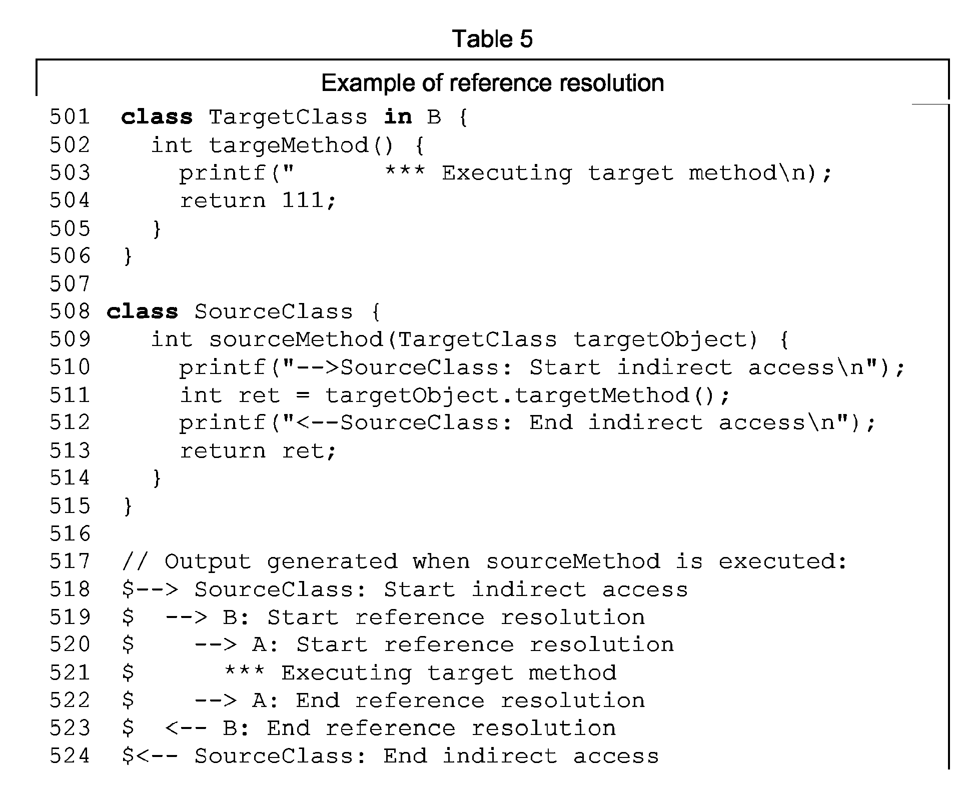

The resolution sequence starts in point 410 and returns in point 417. Between these two points reference continuation methods are executed. The first continuation method is applied to reference 407. This method belongs to the reference class of concept B (line 418 in Table 4). It finds the substituted parent reference (line 420 in Table 4) and then calls its parent continuation method (line 421 in Table 4). In FIG. 4 this corresponds to path 411 with the return along path 416. After that the continuation method of concept A is applied to reference 418. This method again restores its parent reference and calls the next continuation method between 412 (enter) and 415 (exit) which corresponds to line 408 in Table 4. In this point root reference 419 is restored and its continuation method implemented by the root concept is called. Here the access sequence is finished because it is possible to directly access the target object. In particular, it is possible to call the target object business method between 413 and 414. Thus the target method of the target object 408 is wrapped in a nested sequence of intermediate continuation methods applied to references 407, 418 and 419.

Table 5 uses code from Table 4. It demonstrates the logic and sequence of the described process of reference resolution. We define one target class (line 501 and 408 in FIG.4) which is included in concept B (line 413 in Table 4). Because of this inclusion, objects of TargetClass will be represented indirectly by the references of its parent concept B. We define also an auxiliary source class (line 508) from where the target method is called (line 511). The target method is applied to a reference which is passed via the source method parameter (line 509). This method parameter stores the indirect reference which needs to be automatically resolved before the target method itself can be executed. In order to resolve the target object reference (line 511), the target method is wrapped in a nested sequence of reference continuation methods provided by its parent concepts B and A (up to the root). Each of these continuation methods is applied to one reference and restores its (substituted) parent reference. When the root reference is obtained the compiler can directly call the target method. Let us now consider what concretely happens when the source method (lines 509-514) is executed. The output of the program from Tables 5 and 4 is shown in lines 518 through 524. The target method call (line 511) is performed in lines 510 through 512 in the source method and hence the program will print lines 518 and 524 in its output. The compiler has to resolve the target object reference (407 in FIG. 4) and applies the continuation method of reference B which prints lines 519 and 523 in the output. When this method restores its parent reference of concept A it calls the parent continuation method (line 421 in Table 4) which prints lines 520 and 522. The continuation method of concept A restores the root reference and calls the root continuation method (line 408 in Table 4). Since it is the root reference the compiler can directly call the target method which prints line 521 and returns. The sequence 518-524 in Table 5 corresponds to the sequence 410-417 in FIG. 4. Thus the code of the target method is wrapped in intermediate continuation methods which resolve the target object reference. Notice again that this wrapping is performed automatically by the compiler using the parent concepts of the target class. Another important note is that the reference resolution described in this section assumes that all the parent contexts are already resolved. How they are resolved is described below in the next section.

### Context resolution and context stack

In the previous section we described a sequence of resolution of the last reference segment representing the target object where we assumed that all the previous segments representing parent contexts are already resolved. The idea of such a reference resolution consists in transforming the last segment into the corresponding root reference which can be used for direct access. However, in the general case such a resolution process is based on using information from the current context using keyword 'context' (for example, lines 407 and 420 in Table 4 allow us to access a field within the current context). Context is an object where this reference has been created and just as any other object the context is represented by its parent reference. Hence we cannot directly access the context and need to resolve its own reference in order to read/write its fields or call methods. Thus lines 407 and 420 in Table 4 have to be expanded into a more complex sequence of access where we first resolve the context and then access the parent object. A reference to the context is stored as a higher segment of the complex reference and as soon as some parent context needs to be accessed from its child object the corresponding segment has to be resolved.

In the general case in order to resolve any segment of a complex reference we may need to resolve also all the previous higher segments. For example (FIG. 4), in order to resolve reference segment 407 representing object 408 it is necessary to resolve context 404 represented by its reference segment 406. Here again, we need to resolve context 403 represented by segment 405. In such an approach it is necessary to resolve all the parent high segments of a complex reference in order to resolve a child segment. This resolution can be made implicitly when we use keyword 'context' (what is assumed in the previous section). One problem is that all segments of the complex reference needs to be resolved for any child segment. For example, if a complex reference has 10 segments then its second segment will be in the general case resolved 8 times for each of its child segments. Another problem is that the same resolution procedure needs to be executed for each occurrence of keyword 'context'. Thus this approach requires multiple repeated resolutions of the parent contexts and its performance can be rather low.

In order to avoid such multiple repeated resolutions of the same parent segments this invention proposes to use a modified sequence of access where high segments representing contexts are resolved before lower segments. The idea of this approach is that we avoid repeated resolutions of the same parent segments by storing their resolved references in a special data structure called the context stack. The context stack stores all intermediate parent contexts by using root references which can be used directly rather than resolving them again. An important feature is that the context stack is built as a preliminary operation before the target object is resolved. As a result all parent contexts are directly accessible when we start resolving the last segment according to the procedure described in the previous section. In other words, this technique guarantees that whenever we meet keyword 'context' in the source code, this object is already resolved and its direct root reference is stored in the context stack.

The mechanism of the context stack uses the following sequence of access. Any object access starts from the very first (high) segment and ends with the last (low) segment which represents the target object. The very first element pushed onto the context stack contains a direct reference to the first context, the second element is a direct reference to the second context and the last element on top of the context stack is a direct resolved reference to the last context which is the target object. Thus when we need to resolve the next segment all of its parent contexts are already resolved and stored on the stack. When we use keyword 'context' in the program we can directly access the corresponding object using its resolved reference from the context stack. In particular, when we resolve the last segment representing the target object all of the parent segments are already resolved so this procedure can be executed much faster than using the standard access sequence described in the previous section. The number of elements in the context stack is equal to the number of segments in the current complex reference.

The use of the mechanism of the context stack does not change how a concept-oriented program is written. It simply makes its execution more efficient by increasing performance of access on complex references. This means that any access to parent objects is executed directly by retrieving their root references from the context stack rather than resolving them for each use on demand. For example, each line of code in Tables 3 and 5 where we used keyword 'context' will be executed directly without resolution in the case where the context stack is used, while without the context stack this keyword needs to be resolved each time. In order to implement this mechanism the compiler, interpreter or execution environment has to provide all the necessary facilities including data structures and sequence of access. An important feature of using the mechanism of the context stack is that higher segments are resolved before lower segments of the complex reference (and the result of the resolution is stored in the context stack for use from child objects). In many cases the programmer would like to have control over this sequence of resolution and intervene in each step in this resolution process. In other words, we would like to have the possibility to intercept the points where each segment is going to be resolved. For this purpose the present invention uses a special method of the object class called 'continue'. Notice that this method has the same name as the continuation method of the reference class described in the previous section. It is a general feature of concepts that they have dual methods having the same name in both the object class and the reference class. Thus both the object class and the reference class may define two versions of their continuation methods. However, their role is very different. The two continuation methods defined for each concept work in close cooperation with the purpose of organizing the generic sequence of access. Namely, these methods are called one after another (interleave). The idea is that when a reference segment is resolved by the reference continuation method we call this resolved object continuation method which then resolves the next segment using its reference continuation method and the resolved reference is used to call the next object continuation method and so on down to the target object.

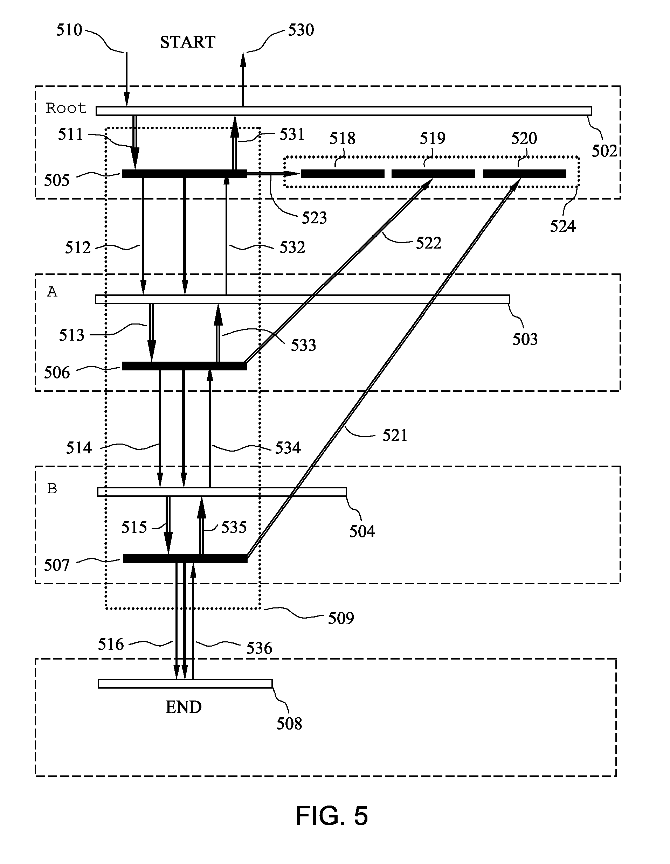

FIG. 5 shows a sequence of access to an object represented by a complex reference using the mechanism of the context stack. Target object 508 is represented by means of its complex reference 509 consisting of three segments 505, 506 and 507 created in their contexts 502, 503 and 504, respectively, The root context 502 is a well known object provided by the compiler, interpreter or execution environment. The first root segment 505 represents the second context 503. The second segment 506 represents the third context 504. The last (third) segment 507 represents the fourth context 508 which is the target object being accessed. If we were using a sequence of reference resolution described in the previous section then we would start by resolving the last segment as shown in FIG. 4 and demonstrated in Tables 4 and 5. However, implicitly, it would require resolving all of the parent segments as soon as they are used during the resolution process. In contrast, in the new access sequence based on the context stack we start the access sequence explicitly from the very first (high) segment of the complex reference and then continue by resolving lower segments down to the last segment representing the target object. The result of each resolution is stored in the context stack 524 which grows from left to right as the access proceeds and lower segments are resolved. The continuation methods of the object class (single arrows) correspond to enter-return points 510-530, 512-532, 514-534 and 516-536 for contexts 502, 503, 504 and 508, respectively. The continuation methods of the reference class (double arrows) correspond to enter-return points 511-531, 513-533 and 515-535 for reference segments 505, 506 and 507, respectively.

Let us consider this access sequence in detail. The procedure starts by entering the root context 502 via its object continuation method between points 510 (enter) and 530 (exit). Then it resolves the very first segment 505 of the complex reference 509 using the root reference continuation method 511-531. Since this segment is already in the system default format (i.e., it belongs to the root context 502) it does not need to be resolved and it is simply pushed (path 523) onto the currently empty context stack 524 as its very first element 518. After the reference segment 505 is resolved and pushed onto the stack the access procedure calls this resolved object (503) continuation method 512-532. On the next step the access procedure resolves the second segment 506 in the reference continuation method 513-533. This resolution method processes the second segment 506 and pushes the system default reference onto the context stack as its new top element 519 (path 522). Here again, once this object has been resolved, its continuation method 514-534 is called. This object continuation method starts resolving the third segment 507 by applying its continuation method 515-535 (here the context stack already contains two elements 518 and 519). The third segment 507 is resolved in the same way (path 521) by using the methods of the context 504 which is stored on the context stack as the top element 519. The result of the resolution of the third segment is pushed onto the top of the context stack as element 520 (path 521). After that the complex reference is completely resolved and the top element on the context stack is actually a direct default reference to the target object 508. Here we reach the context of the target object 508 using its continuation method 516-536 (if it has been defined for the target class) and then the target method is executed between points 516 and 536. Note that the context stack is available when the target method is being executed and we can access all the parent objects (contexts) directly without resolution. In case where there are many such method calls of the parent objects performance can increase significantly in comparison with the procedure described in the previous section where the context stack is not used. Notice that the sequence of access described in the previous section and shown in FIG. 4 and Tables 4 and 5 corresponds to path 521 in FIG. 5.

Notice again that it is a generic sequence of access where the compiler used two continuation methods which are provided by the programmer. The programmer is responsible for writing the code of the continuation methods and he/she can modify the intermediate behaviour and algorithms used to access objects. In particular, it is possible that this sequence will be shorter because some methods will not be explicitly written and hence the compiler will optimize them. Or, the programmer might break this sequence and raise an exception in the case of impossibility of access to the object (for example, an object might be currently locked).

An example of a program demonstrating the described sequence of access is shown in Table 6. This program is an extended version of the program shown in Table 4 and it corresponds to the diagram shown in FIG. 5. It defines two concepts A included in Root (lines 601-613) and B included in A (line 615-628). Concepts A and B have their continuation methods defined in both the object class (line 604-618 for concept A and line 618-622 for concept B) and the reference class (the same as in Table 4). Continuation methods of the object classes will automatically intercept all accesses to their objects, print some messages and continue. The context stack is maintained automatically by the compiler behind the scenes. Concept A corresponds to object 503 and reference 506 while concept B corresponds to object 504 and reference 507 in FIG. 5. Any object of concepts A and B can be accessed only via their corresponding continuation methods which are called just after these objects are resolved (512 -532 for concept A, and 514-534 for concept B, FIG. 5). The object continuation method of concept A prints a message when it starts (line 605) then resolves its reference which belongs to this same concept (line 606) and finally again prints a message (line 607). Notice that line 606 is a call of the reference continuation method of this same concept which has been described in the previous section and shown in FIG. 4. Here we use keyword 'ref' to indicate that it is a reference continuation method, i.e., 'ref' is the next segment of the complex reference. The object continuation method of concept B is implemented similarly and simply resolves its reference (line 620) between two print statements (lines 619 and 621). Normally the programmer will provide some more meaningful processing for these methods. For example, it might be useful to check permissions when the process enters an object or allocate some resources for this access. If the incoming process does not have necessary permissions then an exception could be raised instead of the normal continuation via reference resolution.

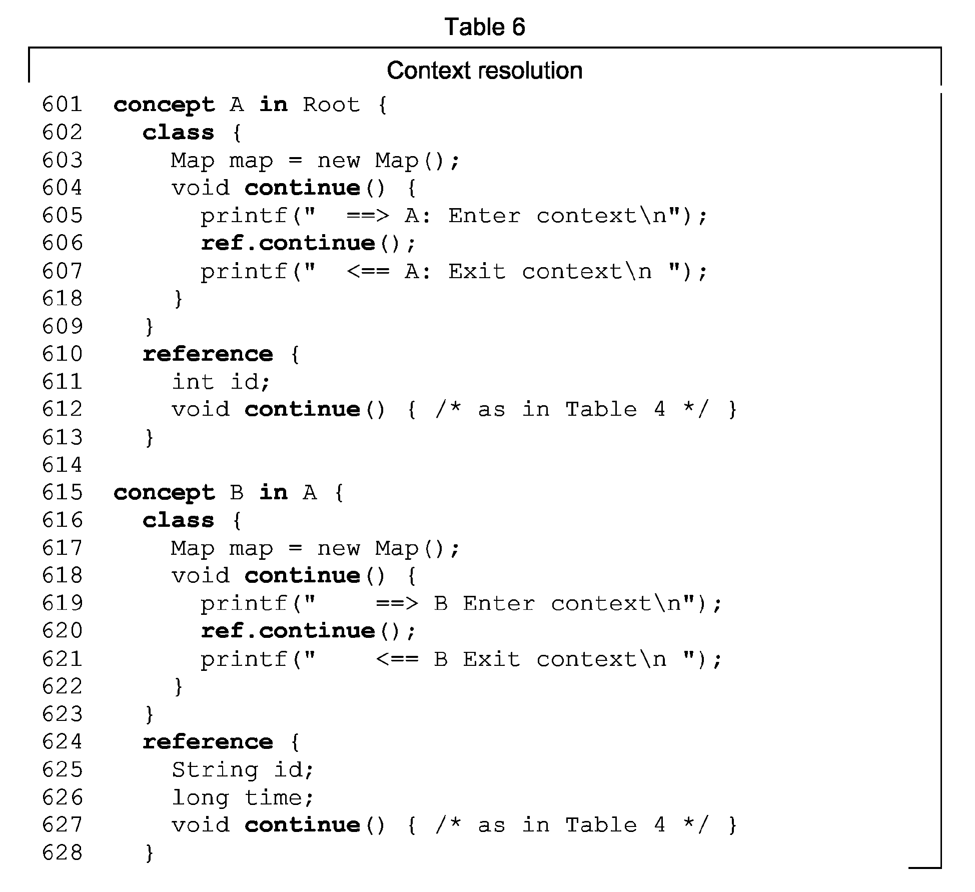

Table 7 shows an example of program code consisting of two classes SourceClass and TargetClass (lines 701-715), and the output (lines 717-730) generated by the source class when sourceMethod is executed. TargetClass is included in concept B defined in Table 6 (line 615) which itself is included in concept A (line 601). Then an instance of TargetClass is used from a method of SourceClass (line 711 in Table 7). Because the class of this target object is included in concept B it will be represented and accessed indirectly using a sequence described in this section. In other words, the target business method call is wrapped into a nested sequence of intermediate continuation methods provided by parent concepts A and B. Table 7 shows the output produced by sourceMethod (lines 709-714) from the program provided in Tables 6 and 7. Before the target object is reached (line 710) and after the target method returns (line 712) the source method prints messages 718 and 730, respectively. The target method call (line 711) itself starts from entering context A implemented in the object class continuation method (lines 614-618, Table 6). This method again prints two messages when it starts (line 605) and before it returns (line 607) and hence we get two lines in the program output 719 and 729, respectively. This corresponds to 512 and 532 in FIG. 5. When the object continuation method of concept A is being executed (lines 605-607) we are within context A (503 in FIG. 5). Here we call this concept reference continuation method which is applied to the next segment of the complex reference (line 606, Table 6). This reference method corresponds to 513-533 which resolves the reference segment 506 along path 522 (FIG. 5). Method 612 (Table 6) prints lines 720 and 728 (Table 7) and resolves its reference segment which is stored on the context stack as element 519 (FIG. 5). This means that the next context 504 (FIG. 5) has been completely resolved and can be entered. Then the next child concept continuation method (line 618 in Table 6) is called which prints lines 721 and 727 in the program output (Table 7). Within this method the process is executed in the context 504. It resolves its segment of this complex reference 507 into the root reference 520 along path 521 (FIG. 5). In code this resolution procedure is implemented in the reference continuation method (line 620) which prints lines 722-726 in the program output precisely as described in the previous section. This procedure consists in resolving reference B into reference A which is then resolved into the root reference and placed on the context stack. Finally the target business method is executed and prints line 724. Thus the target business method call is wrapped into a sequence of its parent continuation methods where object continuation and reference continuation interleave.

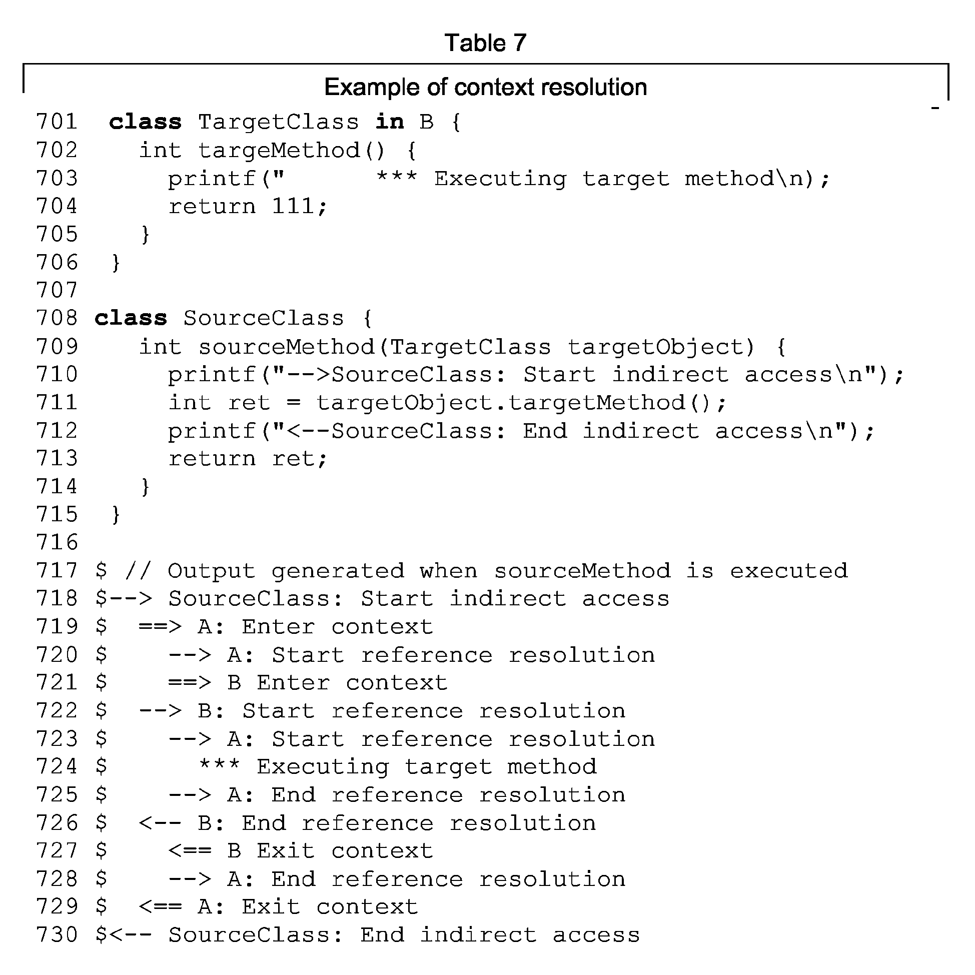

### Uses of indirect representation and access

In this section we describe how the proposed mechanism for indirect representation and access can be used. The main idea is that instead of the conventional classes we use concepts and then all method calls and other types of access request pass through parent concepts before they reach the target. The sequence of access consists in interleaving object class and reference class continuation methods provided by parent concepts. Let us assume that there is a target class Account (lines 801-805 in Table 8) with some business methods (lines 803 and 804). We want to use this class as usual from other classes in our program, for example, from SourceClass (line 807). A method of SourceClass gets a reference to an object of the target class as its parameter (line 808) and then carries out some operations. In our example the target object represents an account with some balance stored in its field (line 802) and the source method credits this accounts by getting its current balance (line 809), adding some amount to it (line 810) and then storing this new balance back in the account object (line 811). For these operations we use two target business methods getBalance (line 803) and setBalance (line 804).

If we were using this Account class in the conventional way then each invocation of its business method would be executed directly without any intermediate actions (as a part of this program). In particular, in prior art a call of method getBalance (line 809) and setBalance (line 811) would directly result in execution of their first lines 803 and 804, respectively. (In this case the target class has to be defined without inclusion in any parent concept.) Let us now assume that we want our accounts to be persistent rather than stored in main memory. The traditional approach consists in loading an account from persistent storage before it needs to be accessed and then storing back its new state. And this has to be made each time we need to access an account. However, this invention allows us to perform access transparently so that all intermediate operations are performed behind the scenes. For this purpose we develop a parent concept called Persistent (line 815) which implements all the necessary logic of representation and access to persistent objects. Then we simply include our target classes in this concept (keyword 'in' in the declaration of concept Account, line 801) and all their objects will automatically be persistent. Now we can use our account objects as usual by calling their business methods, however, this will result in a set of intermediate operations executed when accounts are accessed. Thus this new approach allows us to manipulate target objects as if they were normal objects in OOP and at the same time to automatically inject the necessary intermediate actions implementing some logic of indirect representation and access.

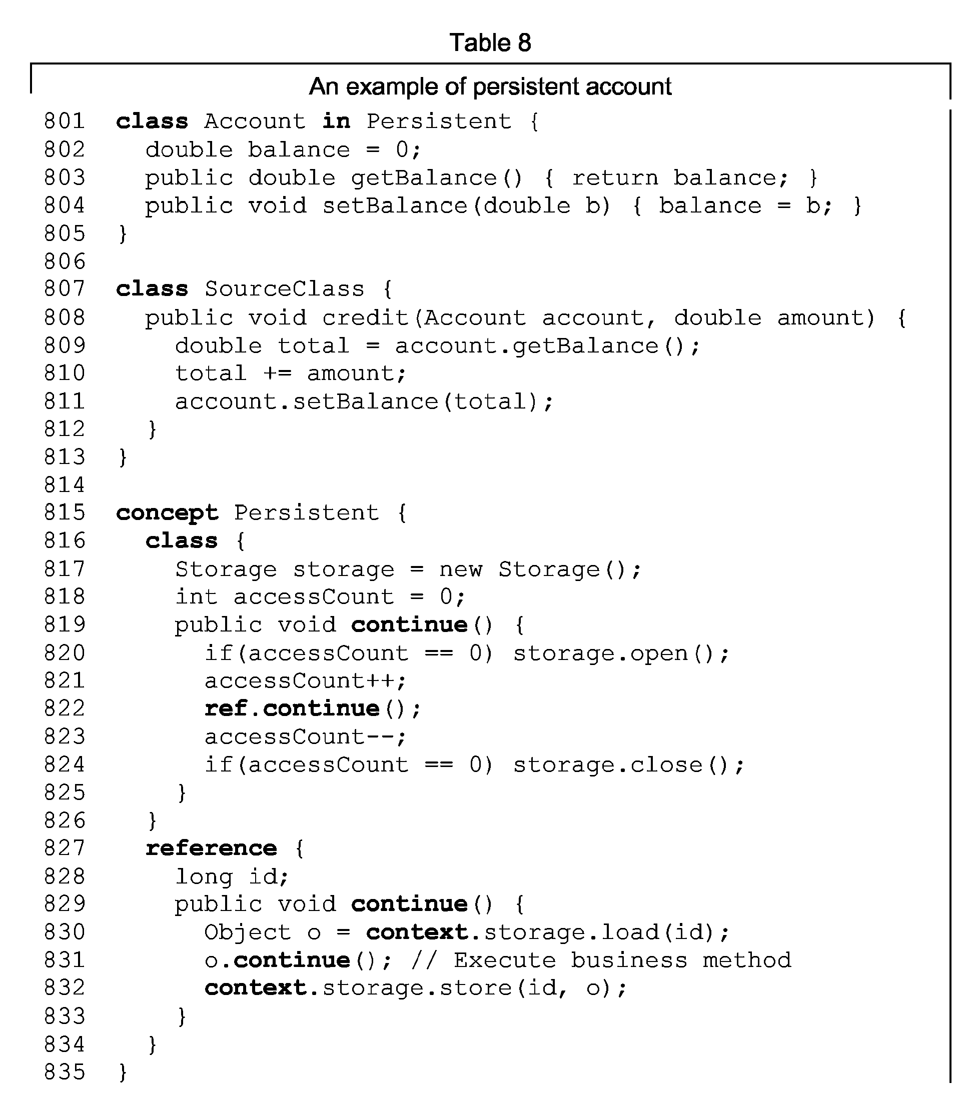

The Persistent concept is included in Root concept and hence its objects are represented by root references (system default references providing direct access). Each object of the Persistent concept (persistent context) is responsible for representation and access to many target objects such as instances of the Account class. Therefore it defines field storage (line 817) which provides access to concrete persistent storage such as a file or a database. The object class of the Persistent concept also defines the accessCount field (line 818) where it stores the number of processes currently within this context. Its reference class is intended to identify child objects by means of one long integer field (line 828) which has a unique value for each child object within this context (within one storage). When the Account class is included in the Persistent concept its objects will be represented by long integers which replace some root references. The complex reference of each account (Account class instance) consists of two segments where the first high segment is a root reference to a storage object of the Persistent concept and the second low segment is a long integer uniquely denoting this object within this storage. Thus accounts can be stored in different storage objects where they are identified by long integers. In particular, parameter account in method credit (line 808) of SourceClass is such a complex reference which needs to be resolved before this account can be accessed.

A sequence of access to a target account consists of two steps:
(i) resolving the first high segment and entering the first context (persistent storage), and (ii) resolving the second segment and entering the second context which is actually the target object of class Account. The first segment is of root type and therefore does not need to be resolved. So it is placed on the context stack as the very first element. After that we enter the context of the Persistent concept using its object class continuation method (lines 819-825). Thus it is the first method that will be executed each time an account object is going to be accessed. The main task of this method consists in preparing this persistent storage for access and controlling the access count. In this example we open our persistent storage if no process has entered this context yet (line 820). Accordingly, after this access is finished we close our persistent storage provided that there are no other processes within this context (line 824). Once the storage is open any child object can access it, particularly, it is possible to resolve references. Before this method continues it increments the accessCount field in order to keep track of internal processes (line 821). Accordingly, after the current access is finished this access count is decremented (line 823).

When the context is prepared for access the object continuation method calls its reference continuation method (line 822). This method (lines 829-833) is applied to a reference of this concept having one long integer field which has to be resolved into a root reference representing the target account object. Since the context is already resolved and stored in the context stack we can directly access it using keyword 'context' (lines 830 and 832). The main task of this reference continuation method consists in restoring the target object in memory given its long integer identifier. For this purpose we use the storage object from the context which is responsible for object persistence. In order to restore this object we use method load with long integer as a parameter which returns a root reference to this object in memory (line 830). After access is finished we store this object back in order to save its new state (line 832). Between these two lines this object can be directly accessed and hence this method continues (line 831). It is precisely the point where the target business method is called such as getBalance or setBalance of the target Account class.

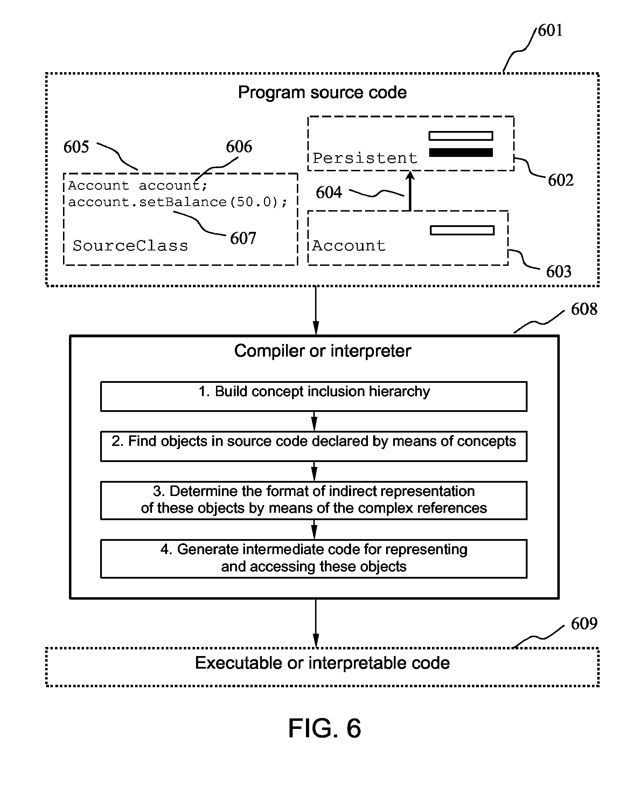

FIG. 6 is flowchart depicting a process of compilation of the concept-oriented program. The program source code 601 consists of a concept definition 602 and the target class 603. The target class 603 is included in the parent concept 602 by means of syntactically identifiable inclusion relation 604. This effectively means that objects of this target class will be represented and accessed indirectly by means of its parent concept. The program source code also includes places where objects of the target class are used. The source class 605 has a declaration of the variable 606 and the target business method call applied to this variable 607. Notice however, that since this variable is declared with concept as its type it will be represented and accessed indirectly. Compiler or interpreter 608 receives this source code and performs the following operations in order to translate it into the executable or interpretable form. It identifies all concept declarations and builds an inclusion hierarchy of concepts (1). Here the compiler also adds the root of this concept hierarchy, references of which provide means for direct representation and access. Then the compiler finds objects (variables, method parameters, class fields, return values etc.) with classes included in other concepts (2). For each such object the compiler finds format of its complex reference depending on the position of this target class in the inclusion hierarchy (3). Then the compiler generates an appropriate code for representing and accessing these objects taking into account that they are represented indirectly by means of their complex references (4). In particular, this code includes operations for maintaining the context stack and routines for reference resolution. Finally the generated code is stored in the target format 609 that can be executed, interpreted or used as a library. Notice that the generated code can be either concept-free or include instructions that can be executed only in a concept-aware run-time environment.

### Alternative sequence of access

Concept as a programming construct is a pair consisting of one object class and one reference class. In the previous sections we assumed that any object is represented by its parent concept reference or, equivalently, references of this concept are used to represent objects of its child concept. However, it is also possible to use an alternative approach in which it is assumed that any object is represented by a reference of this same concept or, equivalently, references of this concept are used to represent its own objects. Thus, if in the first approach (previous sections) an object is represented by a reference provided by its parent concept then in the alternative approach described in this section an object is represented by a reference described in its own concept. For example, if there is a target class and we need to represent its objects by means of text strings then in the first approach this format is described as a reference class of its parent concept while in the alternative approach this format is described as a reference class of this object concept. Thus, there are two design alternatives supported by concepts as a programming construct proposed in this invention:
- in the first approach the continuation method of this concept object class is called after the continuation method of the parent concept reference class, and
- in the second alternative approach the continuation method of this concept object class is called after the continuation method of this concept reference class.

Note that in both approaches the role of the continuation methods does not change. The continuation method of the reference class is intended to resolve its reference and the continuation method of the object class is called after this object has been resolved. Thus the main distinction of the alternative sequence of access is that the continuation method of the object class is called after its own reference has been resolved (rather than its parent reference resolution in the previous approach). Then reference resolution is carried out in the context of its parent object rather than its own object. In both cases continuation methods of the object class and the reference class interleave and the difference is only how they are shared between concepts.

Let us again consider two concepts A and B and two classes SourceClass and TargetClass as shown in Table 9. Here we define the reference class of the concept before its object class in order to emphasize that references are resolved before objects. The reference class and the object class for both concepts A and B consist of some fields intended to identify objects (not shown) and continuation methods. The continuation methods print some line of text on enter/exit and continue. Thus we have four continuation methods defined in two concepts A and B. If some child class is included in concept B and its business method is called then the four continuation methods of concepts A and B will be called in the following order:
1. A::continue() - reference method (line 904)
2. A::continue() - object method (line 912)
3. B::continue() - reference method (line 922)
4. B::continue() - object method (line 930)

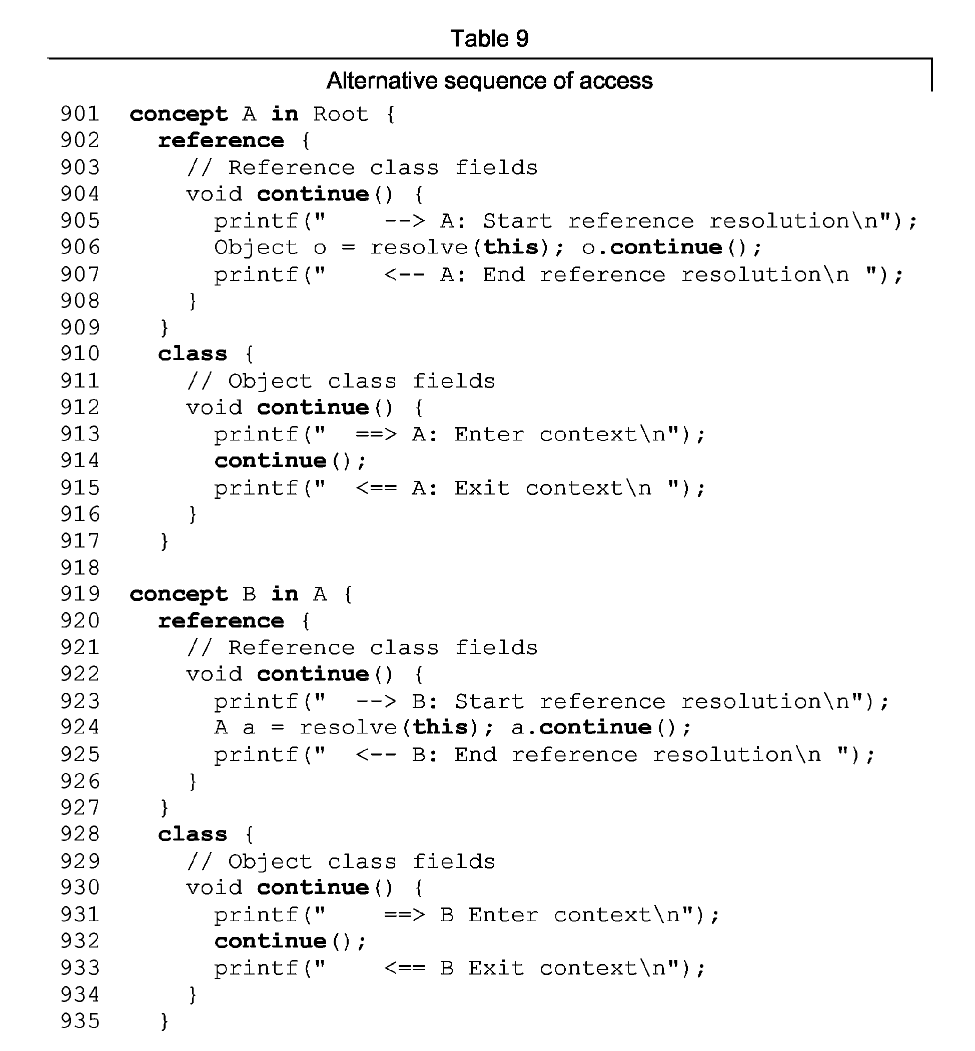

For comparison, if we were using the sequence of access described in the previous section then the order would be the following:
1. A::continue() - object method (line 912)
2. A::continue() - reference method (line 904)
3. B::continue() - object method (line 930)
4. B::continue() - reference method (line 922)

In both cases the reference and object continuation methods interleave and the difference is which of them is called first. In the alternative sequence of access described in this section we assume that it is the continuation method of the reference class that is called first and only then the continuation method of the object class is called. As usual each continuation method of the reference class has to resolve this reference and produce a root reference which is then used to call the continuation method of the object class. This direct reference is pushed onto the context stack and is used to execute the next object continuation method. This method again calls its reference continuation method which resolves this reference pointing to the next object and so on down to the target object. Thus the last resolved reference is a direct representation of the target object which can be used to execute its business method.

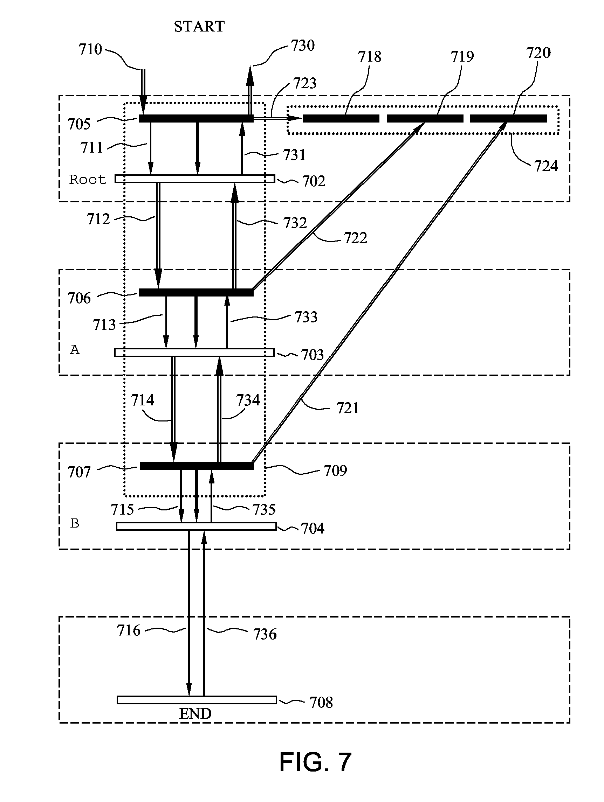

FIG. 7 is a sequence diagram demonstrating this alternative sequence of access. The composition of references and objects is the same as in FIG. 5 and the only difference is the membership of these objects and references in concepts. This access sequence starts by resolving the very first (high) segment 705 of the target object complex reference 709 between points 710-730. As usual this segment is of the root concept and hence does not need to be resolved so it is pushed onto the context stack 724 as the very first element 718. It is assumed that this resolved reference represents object 702 of this same concept (rather than an object of the child concept in the previous approach) so the next to execute is the continuation method 711-731 of this concept object class. Somewhere in its code this method calls the reference continuation method 712-732 which is applied to the next segment of reference 706. This reference continuation method again resolves this reference segment (path 722) and the resolved direct reference 719 is pushed onto the context stack as the top element. Then this concept object continuation method 713-733 is called which again somewhere in its code calls the reference continuation method 714-734. The last (low) reference segment 707 represents the target object and its resolved reference 720 is used to call the target object business method between points 716-736. (Here one reference continuation method is skipped because the target concept has no reference class defined.)

Choosing one of the two described sequences of access requires changing design of concepts. However, it does not influence the use of target objects because in both cases all the peculiarities of access are hidden behind the intermediate parent concepts. In other words, we can choose one of the two sequences and then concepts should be designed in an appropriate way. This normally influences how references are resolved and where the necessary information is stored.

### Conclusions

The present invention encompasses a programming language construct called concept and a method for indirect representation and access in an object-oriented programming language. Concept is a combination of one object class and one reference class with instances called objects and references, respectively. Objects are passed by reference and references are passed by value. Concept combines in one programming construct two types of program functionality: explicitly called target business methods and hidden intermediate methods executed behind the scenes when program objects are being accessed.

Concept inclusion relation allows the programmer to specify where and how the intermediate functionality described by means of concepts has to be activated. The idea here is that the target class or concept is represented and accessed by means of its parent concept which is indicated in its declaration. Such an indirection is nested if the parent concept has its own parent concept. Objects of the target class or concept are represented by means of complex references. A complex reference is a sequence of references belonging to the parent concepts starting from the root and ending with this concept. In order to automatically and transparently resolve its reference segment each concept provides a special continuation method of its reference class. An object class may also provide a continuation method which will be automatically called when this object reference is resolved and the object is going to be accessed.

A concept-oriented program uses concepts instead of classes. In particular, variables, parameters, fields, return values and other elements are declared with concept as its type rather than class. When the compiler, interpreter or execution environment encounters a concept as a type of a variable, parameter, return value, field or other element then it needs to determine the representation format for this object which then defines how this object will be represented and accessed. In prior art programming languages it is always some default format like memory handle or Java reference. In the described method this format is a complex reference which depends on parent concepts of this object concept.

Such objects are then used as usual by calling their methods and reading/writing fields. However, in contrast to prior art languages, each such access will trigger an additional intermediate functionality described in its parent concepts. Thus, by using concepts, the programmer can reduce program redundancy. This method makes the process of code maintenance easier, the program code more readable and the program itself more reliable.

This new approach to programming can be applied to very different complex problems where objects have to be represented and access indirectly. This includes access control and interception, security and object protection, persistence, debugging, tracing and logging, memory and life-cycle management, containers, remote objects, distributed computing, protocol stacks and many other technologies and problems.

## Claims

1. A method for indirect representation and access in an object-oriented programming language, the method comprising: defining one or more concepts, the concept combining in one programming construct two classes:
a) an object class with instances passed by reference, and
b) a reference class with instances passed by value and indirectly representing objects.

2. The method of claim 1 wherein target program objects are represented by means of complex references further comprising the steps of:
a) specifying for a concept one parent concept,
b) determining for the target object an access sequence consisting of concepts, wherein each concept in the sequence is the parent concept for the next concept, and the last concept in the sequence is that of the target object,
c) finding the format of the complex reference as a sequence of reference segments, each segment having a reference class belonging to one concept in the access sequence.

3. The method of claim 2 wherein target program objects are accessed by means of their complex references further comprising the steps of:
a) defining a continuation method of the reference class,
b) applying said continuation method to its reference segment of the complex reference when it is necessary to resolve it.

4. The method of claim 3 wherein a context stack is used, comprising the steps of:
a) resolving reference segments of the complex reference one after another starting from the first segment and ending with the last segment,
b) pushing each resolved reference segment onto the top of the context stack,
c) using resolved references stored in the context stack to directly access the parent objects.

5. The method of claim 4 further comprising the steps of:
a) defining a continuation method of the object class,
b) applying said continuation method to the object after its reference has been resolved.

6. A computer-readable medium storing instructions that when executed by a computer cause the computer to perform a method of any of claims 1 to 5.

7. A computer program comprising instructions that when executed by a computer cause the computer to perform the method of any of claims 1 to 5.

8. A computer system having a processor, a memory and an operating environment, the computer system operable to execute the method of any claims 1 to 5.
